# EUROPÄISCHE PATENTANMELDUNG

(11) **EP 4 674 692 A2**
(43) Veröffentlichungstag der Anmeldung: **07.01.2026**
(21) Anmeldenummer: 25186307.2
(22) Anmeldetag: 30.06.2025
(51) Int. Cl.: B60R 11/00

(54) **ADAPTER FÜR EIN KRAFTFAHRZEUG**

(30) Priorität: 01.07.2024 DE 202024103585 U; 31.10.2024 DE 202024106248 U
(71) Anmelder: SARP Feinmechanik GmbH, 85659 Forstern-Preisendorf (DE)
(72) Erfinder: SCHWINGHAMMER, Anton, 85659 Forstern-Preisendorf (DE)
(74) Vertreter: Misselhorn, Hein-Martin

(57) **Zusammenfassung**

Die Erfindung betrifft einen Adapter (1) für ein Kraftfahrzeug, mit einer Halteplatte (2), wobei an der Halteplatte insbesondere zwei Rastvorrichtungen (3) zum Verrasten des Adapters mit einer am Kraftfahrzeug angebrachten Halterung angeordnet sind und wobei an der Halteplatte mindestens eine Befestigungsvorrichtung (4) zum Befestigen eines Gegenstands am Adapter angeordnet ist, wobei der Adapter zwei insbesondere parallel laufende Rastarme (5) umfasst, wobei je eine der Rastvorrichtungen an je einem Ende der Rastarme angeordnet ist, wobei die Rastarme derart geführt sind und mit einem Feststeller zusammenwirken, dass die Rastarme relativ zu der Halteplatte in und entgegen einer Verschieberichtung verschoben werden können, solange der Feststeller nicht aktiviert ist und die Rastarme festgelegt sind, wenn der Feststeller aktiviert ist, wobei ein Rastarm jeweils einen Bowdenzugmechanismus (6) umfasst, mit welchem der Feststeller gelöst werden kann.

## Beschreibung

### BEREICH DER ERFINDUNG

Die Erfindung betrifft einen Adapter nach dem Oberbegriff des Anspruchs 1.

### TECHNISCHER HINTERGRUND

Bei der Entwicklung von Kraftfahrzeugen muss bei Testfahrten üblicherweise Messtechnik an Bord des Fahrzeugs transportiert werden. Sehr häufig befindet sich die Messtechnik im Innenraum des Kraftfahrzeugs, um beispielsweise während der Testfahrt Zugriff auf die Messtechnik haben zu können. Damit die Messtechnik während der Fahrt nicht verrutscht, wird die Messtechnik verzurrt.

Ein Verzurren ist ein vergleichsweise langer Vorgang und das Verzurren muss mit höchster Sorgfalt erfolgen, damit die Messtechnik im Fahrbetrieb sicher mit dem Fahrzeug verbunden ist. Problematisch ist, dass nicht überall am Fahrzeug Verzurrösen angebracht sind, sodass das Verzurren unter Umständen nur unter erschwerten Bedingungen möglich ist.

### STAND DER TECHNIK

Eine erste Möglichkeit zur besseren Sicherung der Messtechnik zeigt die DE 20 2019 100 463 U1, die vollumfänglich Teil dieser Anmeldung ist. Doch auch der in dieser Schrift beschriebene Adapter zur Anbringung der Messtechnik weist gewisse Schwächen auf. So ist vor allem die Anbringung und das Lösen des Adapters an einer Halterung im Fahrzeug umständlich und schwierig.

### AUFGABE DER ERFINDUNG

Vor diesem Hintergrund ist es Aufgabe der Erfindung, einen Adapter für ein Kraftfahrzeug zur Verfügung zu stellen, welcher mit dem Adapter verbundene Gegenstände, wie beispielsweise Messtechnik, schnell und einfach mit dem Kraftfahrzeug verbindet.

### ERFINDUNGSGEMÄSSE LÖSUNG

Eine Lösung dieser Aufgabe wird durch den Hauptanspruch bereitgestellt.

Erfindungsgemäß wird hierzu ein Adapter für ein Kraftfahrzeug vorgeschlagen, der eine Halteplatte umfasst, wobei an der Halteplatte insbesondere zwei Rastvorrichtungen zum Verrasten des Adapters mit einer am Kraftfahrzeug angebrachten Halterung angeordnet sind. Diese Rastvorrichtungen interagieren mit der angesprochenen Halterung bevorzugt so, dass sie mit der Halterung verrasten. Es ist bevorzugt, dass als Halterung zwei Isofix-Halterungen genutzt werden, die bevorzugt serienmäßig an oder auf den Rücksitzen des Kraftfahrzeugs angebracht sind.

An der Halteplatte ist hierbei mindestens eine Befestigungsvorrichtung zum Befestigen eines Gegenstands am Adapter angeordnet. Ein Gegenstand ist hierbei bevorzugt ein zu befestigendes Teil der Messtechnik oder ein damit in Verbindung stehendes Teil wie spezielle Halterungen.

Der Adapter umfasst insbesondere zwei parallellaufende Rastarme, wobei je eine der Rastvorrichtungen an je einem Ende der Rastarme angeordnet ist. Die Rastarme sind derart geführt und wirken derart mit einem Feststeller zusammen, dass die Rastarme relativ zu der Halteplatte in und entgegen einer Verschieberichtung verschoben werden können, solange der Feststeller nicht aktiviert ist. Dem entgegengesetzt sind die Rastarme festgelegt und damit nicht verschiebbar, wenn der Feststeller aktiviert ist.

Der Adapter zeichnet sich erfindungsgemäß dadurch aus, dass ein Rastarm jeweils einen Bowdenzugmechanismus umfasst, mit welchem der Feststeller gelöst werden kann. Wenn der Feststeller gelöst wurde, befindet er sich in der oben angesprochenen nicht aktivierten Position. Der Bowdenzugmechanismus umfasst mindestens eine Seele (oder auch Innenseil), bevorzugt aus Stahldraht, und eine flexible, aber in Zugrichtung druckfeste Hülle, in welcher die Seele verlegt ist. Die Hülle (oder auch: Hülse) dient zur Führung der Seele sowie als möglicher Abstützpunkt für ein Gegenlager zur Abstützung der zu übertragenden Zugkräfte. Der Bowdenzug kann somit Zugkräfte entlang nahezu beliebig gekrümmten Bahnen übertragen und führt somit zu einer schnellen und einfachen Möglichkeit zur Lösung des Feststellers und der bevorzugt damit verbundenen möglichen Montage und/oder Demontage des Adapters.

### BEVORZUGTE WEITERBILDUNGSMÖGLICHKEITEN DER ERFINDUNG

Eine bevorzugte Ausführungsvariante des Adapters besteht darin, dass der Feststeller ein Ratschenmechanismus ist, der in aktiviertem Zustand gestattet, dass die Rastarme derart, vorzugsweise nach Art eines Teleskops, relativ zu der Halteplatte verschoben werden können, dass die einer Rücksitzlehne des Fahrzeugs unmittelbar gegenüberliegende Stirnseite der Halteplatte näher an die Rücksitzlehne herankommt oder sogar deren Polsterung örtlich zusammendrückt, woraufhin der betroffene Rastarm vorzugsweise selbsttätig in dieser Position festgelegt wird. So ist es auf einfache Art und Weise möglich, die Position der Halteplatte und damit der an der Halteplatte befestigten Gegenstände einzustellen und festzulegen. Besonders vorteilhaft ist es, wenn die Gegenstände (wie Messgeräte) auf der Halteplatte oder ein mit der Halteplatte verbundener Hilfsträger in fahrbereit montiertem Zustand möglichst nahe an der Rückenlehne angebracht sind. Auf diese Art und Weise wird eine besonders gute Fixierung auch bei Kurvenfahrten erreicht und eine möglichst unverfälschte Messdatenbestimmung kann vonstattengehen.

Darüber hinaus ist es besonders bevorzugt, wenn der Feststeller ein Ratschenmechanismus, ein Klinkengesperre oder ein sonstiger Selbsthemmungsmechanismus ist, der ein immer dichteres Heranschieben der Halteplatte an die Rücksitzlehne oder deren immer stärkere Kompression erlaubt, aber verhindert, dass die Halteplatte sich aus einer einmal erreichten Sperrposition wieder in Gegenrichtung, weg von der Rücksitzlehne, bewegt - außer der Bowdenzugmechanismus wird betätigt.

Besonders günstig ist es, wenn der Feststeller so gestaltet ist, dass er folgende kraftsparende Wechselbewegung erlaubt bzw. folgendes Verfahren:
Die Rastfinger der Rastvorrichtung werden mit ihrer jeweiligen Halterung am Fahrzeug formschlüssig verbunden. Dann werden die Rastarme gemeinsam derart relativ zu der Halteplatte verschoben, dass die Halteplatte oder deren Hilfsträger oder die Messgeräte bzw. die sonstige Nutzlast auf der Halteplatte gegen die Rücksitzlehne bzw. deren Polsterung anliegen. Nun wird im Wechselvorschub eine Verspannung mit der Rücksitzlehne erreicht: Zunächst wird im Schritt 1 der eine Rastarm zumindest um eine Raststellung verschoben, wo er dann einrastet, sodass die Halteplatte oder deren Hilfsträger oder die Messgeräte auf seiner Seite noch inniger gegen die Rücksitzlehne anliegen oder deren Polsterung komprimieren (ggf. noch stärker komprimieren). Der gleiche Vorgang wird danach als Schritt 2 für den Rastarm auf der anderen Seite wiederholt. Nötigenfalls werden danach die Schritte 1 und 2 nochmals oder sogar noch mehrmals wiederholt. Dadurch kann mit wesentlich weniger Kraft bzw. Maximalkraft pro Schritt ein sehr inniges Anliegen gegen die Rücksitzlehne bzw. eine sehr starke Verspannung gegen deren Polsterung erreicht werden - was oft nicht möglich wäre, wenn man in einem einzigen Schritt auf ganzer Breite die Polsterung der Rücksitzlehne zusammendrücken müsste.

Zudem ist es besonders bevorzugt, wenn der Adapter einen Stützbügel zur Verhinderung einer Rotation um die Halterung umfasst, und dass der Stützbügel insbesondere einen Haltegriff zum Halten des Adapters umfasst. Hierdurch erfolgt neben der Fixierung des Adapters an der Halterung eine zweite Fixierung, welche eine Rotation des Adapters um die Halterung verhindert. Der Griff erleichtert zudem die Montage und Demontage des Adapters im Fahrzeug.

Des Weiteren ist es besonders bevorzugt, wenn der Adapter eine Sitzplatte umfasst, die in einem Abstand zur Halteplatte mit der Halteplatte fest verbunden ist, wobei die Sitzplatte zum Auflegen des Adapters auf den Fahrzeugsitz vorgesehen ist. Hiermit ist eine flächige Auflagefläche des Adapters auf dem Fahrzeugsitz gegeben, sodass das Gewicht hier leichter auf den Sitz verteilt werden kann.

Eine weitere bevorzugte Ausführungsform des Adapters besteht darin, dass die Verbindung eines Gegenstands mit der Befestigungsvorrichtung lösbar ist und insbesondere eine Schraubverbindung, eine Klemmvorrichtung oder eine Bajonettverbindung ist. Somit kann der Adapter auf einfache Art und Weise mit verschiedenen Gegenständen bestückt werden.

Darüber hinaus ist es besonders bevorzugt, wenn der Adapter mindestens einen Daumenöffner aufweist, mit welchem mindestens ein Bowdenzugmechanismus betätigt werden kann. So kann bevorzugt mit einem Daumenöffner entweder jeweils ein Bowdenzugmechanismus betätigt werden oder auch mit einem Daumenöffner zwei Bowdenzugmechanismen, was jedoch nicht bevorzugt ist. Der Daumenöffner ist hierbei bevorzugt ein Bauteil, welches nur durch die Betätigung mit einem Daumen derart bewegt werden kann, bevorzugt teilweise rotiert, dass der Bowdenzugmechanismus betätigt wird. So kann der Feststeller auf einfache Art und Weise mit nur geringem Aufwand und der Betätigung eines separaten Bauteils gelöst werden.

Zudem ist es besonders bevorzugt, wenn der Adapter in der Nähe des mindestens einen Daumenöffners jeweils einen Gegenhalter aufweist, welcher die Hülse des Bowdenzugmechanismus zurückhält. Der oben schon angesprochene Gegenhalter (oder auch: Gegenlager) wird zur bestimmungsgemäßen Betätigung eines Bowdenzugmechanismus benötigt, um die Abstützung der zu übertragenden Zugkräfte zu übernehmen. "In der Nähe" des Daumenöffners bedeutet, dass der Gegenhalter sich höchstens 20 cm entfernt vom nächsten Punkt des Daumenöffners befindet, bevorzugt sogar höchstens 10 cm, besonders bevorzugt sogar höchstens 5 cm.

Eine weitere bevorzugte Ausführungsform besteht darin, dass der Adapter auf seinen beiden Längsseiten bevorzugt jeweils eine Versteifung als Abstandshalter zwischen Sitzplatte und Halteplatte aufweist. So kann auf einfache Weise sowohl effektiv der Abstand zwischen den beiden Platten gewährleistet werden, als auch eine zusätzliche Versteifung und Stabilisierung des Adapters vorgenommen werden.

Außerdem ist es besonders bevorzugt, wenn der Adapter mindestens einen, bevorzugt zwei Gurthalter aufweist, welche als Führung eines Kraftfahrzeug-Gurts dienen. So kann ein serienmäßiger Kraftfahrzeug-Gurt auf einfache Art und Weise dazu verwendet werden, den Adapter in seinem montierten Zustand weiterhin zu sichern. Dazu sind die Gurthalter bevorzugt so aufgebaut, dass sie den Fahrzeuggurt um den Adapter herumführen und dabei zumindest teilweise in Position halten, damit der Gurt nicht vom Adapter abrutscht.

Darüber hinaus ist es besonders bevorzugt, wenn der Feststeller mindestens zwei einklappbare Zähne umfasst, welche bevorzugt auf der der Halteplatte zugewandten Seite aus dem Rastarm herausragen, wobei die Zähne in Breitenrichtung versetzt zueinander sind. Die Breitenrichtung ist hierbei diejenige Richtung, die senkrecht zur Richtung steht, in welche der Rastarm ineinander zusammengeschoben werden kann und welche der Unterseite der Halteplatte zugewandt ist, bevorzugt sogar berührt. Hierbei kann ein erster Zahn eine ihm zugeordnete Öffnung in der entsprechenden Seite der Verkleidung des Rastarms durchdringen, wobei dieser erste Zahn durch die Betätigung des Bowdenzugmechanismus eingeklappt werden kann. Die "Verkleidung" des Ratsarms ist hierbei nur die äußerste Mantelschicht des Rastarms. Das "Einklappen" des ersten Zahns kann entweder aktiv erfolgen, indem der Zahn durch die Betätigung des Bowdenzugs aktiv nach unten wegklappt, oder passiv, indem der erste Zahn zum Wegklappen freigegeben wird, wobei hierbei noch eine zusätzliche Kraft benötigt wird, um den Zahn dann endgültig einzuklappen. Zudem kann hierbei der zweite Zahn mehrere ihm zugeordnete Öffnungen in der entsprechenden Seite der Verkleidung des Rastarms durchdringen, wobei dieser zweite Zahn durch teleskopartige Verschiebung des Rastarms durch das Überfahren von Material über ihn eingeklappt wird und die teleskopartige Bewegung nach dem Einschnappen in eine Öffnung in einer Richtung blockiert. Der zweite Zahn wird hierbei bei der teleskopartigen Verschiebung des Rastarms "automatisch" eingeklappt, wenn durch die teleskopartige Bewegung der Zahn in einen Bereich bewegt wird, in welchem dieser durch Material über ihm nach unten weggeklappt wird. Bevorzugt umfasst der erste Zahn und/oder der zweite Zahn zudem einen federnden Mechanismus, durch welchen der jeweilige Zahn die Tendenz hat, nach oben - durch die der Halteplatte zugwandten Seite - herausragen zu wollen. So kann im Allgemeinen ein einfacher Feststellmechanismus erreicht werden, der eine einfache und zweckmäßige Bedienung zur Montage und Demontage des Adapters ermöglicht.

Weiterhin ist es besonders bevorzugt, wenn der Feststeller so gestaltet ist, dass in der jeweils extremen Position des zweiten Zahns - und somit entweder ganz hinten oder ganz vorne, also bei komplett eingefahrenem oder komplett ausgefahrenem Rastarm - zunächst der erste Zahn mittels des Bowdenzugmechanismus eingeklappt werden muss, damit eine teleskopartige Verschiebung des Rastarms möglich ist. Hierbei ist das Einklappen wiederum entweder ein aktives Einklappen oder ein Freigeben des Zahns zum möglichen Einklappen. Auf diese Art und Weise wird auf einfache Art und Weise ein Sicherheitsmechanismus geschaffen, um ungewolltes Ein- oder Ausfahren des Rastarms zu vermeiden.

Des Weiteren ist es besonders bevorzugt, wenn der Feststeller so gestaltet ist, dass der zweite Zahn nicht in eine der ihm zugeordneten Öffnungen einrastet, wenn eine auseinanderschiebende teleskopartige Bewegung des Rastarms ausgeführt wird - zumindest im an der Halteplatte eingebauten Zustand. So ist ein komplettes Ausfahren des Rastarms möglich, ohne dass jede einzelne Öffnung des Rastarms einzeln durchfahren werden muss. Während beim Einfahren, also der ineinanderschiebenden teleskopartigen Bewegung, ein einzelnes Durchgehen und Einrasten des zweiten Zahns in die jeweiligen Öffnungen - wie oben erwähnt - sogar bevorzugt ist, ist das Ausfahren eher schnell und ungestört erwünscht, was hiermit einfach erreicht wird.

Eine weitere bevorzugte Ausführungsform besteht darin, dass die Rastvorrichtung eine rotierbare Halterungsaufnahme umfasst, die einen oberen und einen unteren Rastfinger aufweist, wobei der obere und untere Rastfinger die Halterung teilweise umgreifen, wobei die Halterungsaufnahme bei Einführen der Halterung und einem Rotieren der Halterungsaufnahme um 90 Grad derart einrastet, dass der obere Haltefinger den direkten Zugang zur Halterung verdeckt und die Halterungsaufnahme bestimmungsgemäß nicht mehr gelöst werden kann, außer der Bowdenzugmechanismus wird betätigt. So wird der Adapter nochmals zusätzlich gegen ein ungewolltes Entkoppeln von der Halterung gesichert.

Weitere mögliche Ausgestaltungen, Funktionen und Vorteile ergeben sich aus den abhängigen Ansprüchen und/oder der nachfolgenden Beschreibung der beispielhaften Ausführungsform und/oder unter Bezugnahme auf die Figuren.

### EINE WEITERE DER ERFINDUNG ZUGRUNDE LIEGENDE AUFGABE

Darüber hinaus liegt der Erfindung die Aufgabe zugrunde, ein möglichst flexibles System zur Verfügung zu stellen, mit welchem Gegenstände, wie beispielsweise Messtechnik, schnell und einfach in dem Kraftfahrzeug montiert werden kann.

### DIE WEITERE ERFINDUNGSGEMÄSSE LÖSUNG

Eine Lösung dieser Aufgabe wird durch den Anspruch 21 bereitgestellt.

Hier wird ein System vorgeschlagen, welches den erfindungsgemäßen Adapter, eine Adapterplatte, bevorzugt eine Abstützung, einen zusätzlichen Adapter zur Befestigung an dem Beifahrersitz des Fahrzeugs und eine Halteplatte zur Anbringung im Kofferraum des Fahrzeugs umfasst.

Der Adapter zur Befestigung an dem Beifahrersitz ist in der noch nicht veröffentlichten Anmeldung 20 2024 103 584.4 beschrieben, welche vollumfänglich Teil dieser Offenbarung ist. Die entsprechende Anmeldung wird zusätzlich zu dieser Anmeldung als zusätzliches Dokument mit eingereicht.

Die Halteplatte zur Anbringung im Kofferraum des Fahrzeugs ist in der noch nicht veröffentlichten Anmeldung 20 2024 001 249.2 beschrieben, welche vollumfänglich Teil dieser Offenbarung ist. Die entsprechende Anmeldung wird zusätzlich zu dieser Anmeldung als zusätzliches Dokument mit eingereicht.

Das erfindungsgemäße System zeichnet sich dadurch aus, dass Messtechnik und/oder mit der Messtechnik in Verbindung stehende Komponenten bevorzugt vollumfänglich auf der Adapterplatte montiert wird bzw. werden. Die Adapterplatte wird bevorzugt über die pilzförmigen Vorsprünge der Adapterplatte, die in die entsprechend kooperierenden Befestigungsvorrichtungen eingreifen, montiert, wobei die Adapterplatte auf die gleiche Art und Weise auf der Halteplatte des erfindungsmäßen Adapters am Rücksitz montiert werden kann oder am Adapter des Beifahrersitzes montiert werden kann oder an der Halteplatte im Kofferraum montiert werden kann.

So kann auf einfache Art und Weise ein flexibles Befestigungssystem geschaffen werden, bei welchem die Messtechnik bzw. damit in Verbindung stehende Komponenten außerhalb des Kraftfahrzeugs, bevorzugt sogar schon im Labor, auf eine Adapterplatte montiert werden können. Im Fahrzeug sind dann bevorzugt schon ein Adapter am Beifahrersitz, mindestens ein Adapter auf einem der Rücksitze und/oder eine Halteplatte im Kofferraum montiert. Der Benutzer kann dann je nach Testsituation flexibel entscheiden, auf welches der aufnehmenden Teile die Adapterplatte montiert werden soll. Darüber hinaus ist die Montage und Demontage der Adapterplatte sehr einfach und schnell durchzuführen, bevorzugt ohne Werkzeug und nur durch das Aufsetzen und Verschieben der Adapterplatte.

Es sei hier betont, dass die Verbindung der Adapterplatte mit den aufnehmenden Teilen über die pilzförmigen Vorsprünge und den entsprechend aufnehmenden Bohrungen mit Langloch (Befestigungsbohrrichtungen) bevorzugt ist, jedoch auch andere Arten der Befestigung denkbar sind. Das Ziel der Befestigung ist eine leicht zu lösende und dennoch sichere Verbindung zu den aufnehmenden Teilen.

### FIGURENLISTE

Figur 1 zeigt eine Explosionsdarstellung eines montierten Adapters in dreidimensionaler Darstellung.
Figur 2 zeigt einen montieren Adapter in dreidimensionaler Darstellung.
Figur 3 zeigt eine teilweise Explosionsdarstellung des montierten Adapters in dreidimensionaler Ansicht.
Figur 4 zeigt die Halteplatte des Adapters in der Draufsicht.
Figur 5 zeigt eine Pilzführung des Adapters in dreidimensionaler Ansicht.
Figur 6 zeigt einen Stützbügelhalter des Adapters in dreidimensionaler Ansicht.
Figur 7 zeigt eine Versteifung des Adapters in dreidimensionaler Ansicht.
Figur 8 zeigt den Stützbügel des Adapters in dreidimensionaler Ansicht.
Figur 9 zeigt einen Daumenöffner des Adapters in dreidimensionaler Ansicht.
Figur 10 zeigt einen Gurthalter des Adapters in dreidimensionaler Ansicht.
Figur 11 zeigt einen Teil eines Gegenhalters des Adapters in dreidimensionaler Ansicht.
Figur 12 zeigt eine Adapterplatte in dreidimensionaler Ansicht von unten.

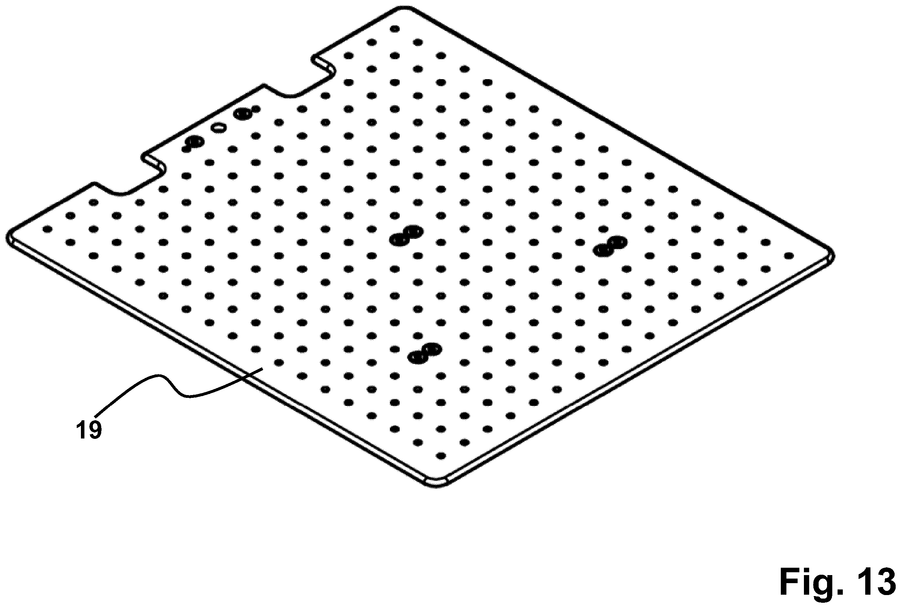

Figur 13 zeigt eine Adapterplatte in dreidimensionaler Ansicht von oben.
Figur 14 zeigt einen erfindungsgemäßen Adapter mit einer Abstützung für den Brustgurt in dreidimensionaler Ansicht.
Figur 15 zeigt eine Abstützung für den Brustgurt in dreidimensionaler Ansicht.

### BEVORZUGTE AUSFÜHRUNGSFORM

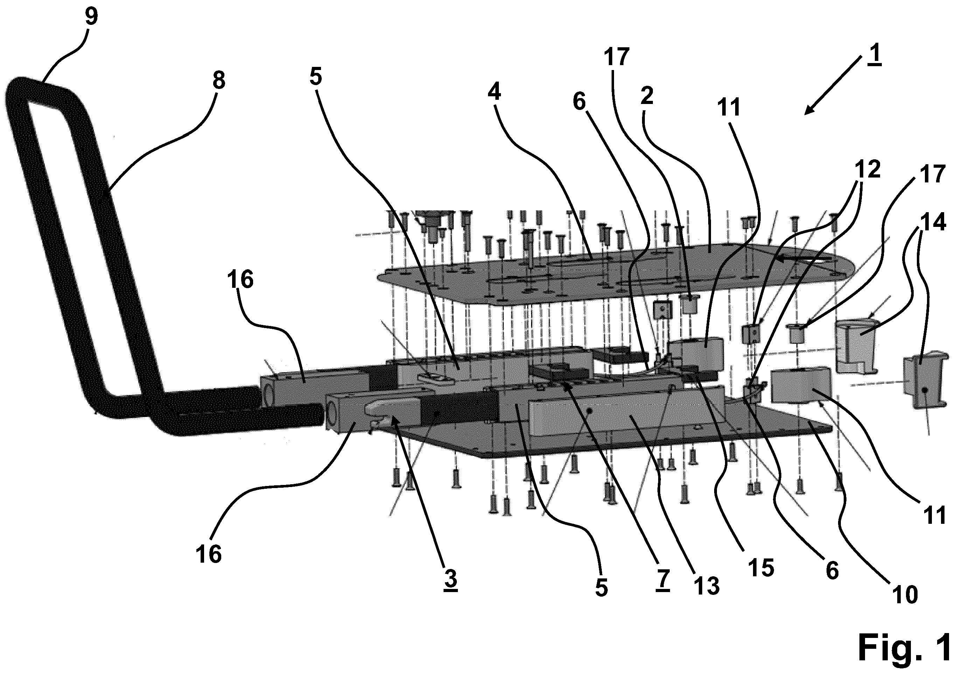

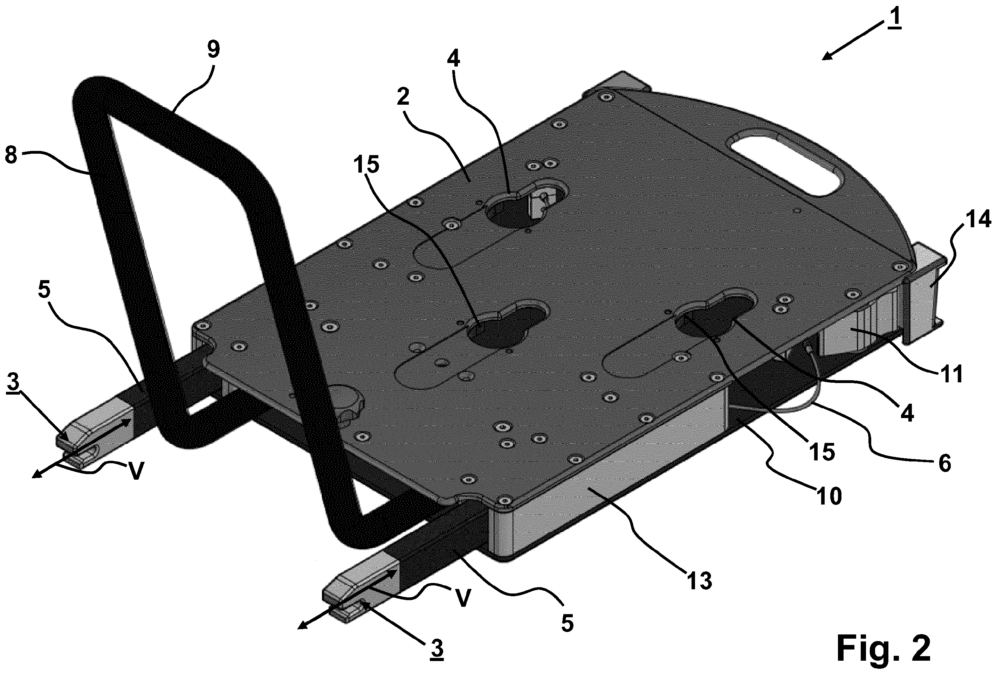

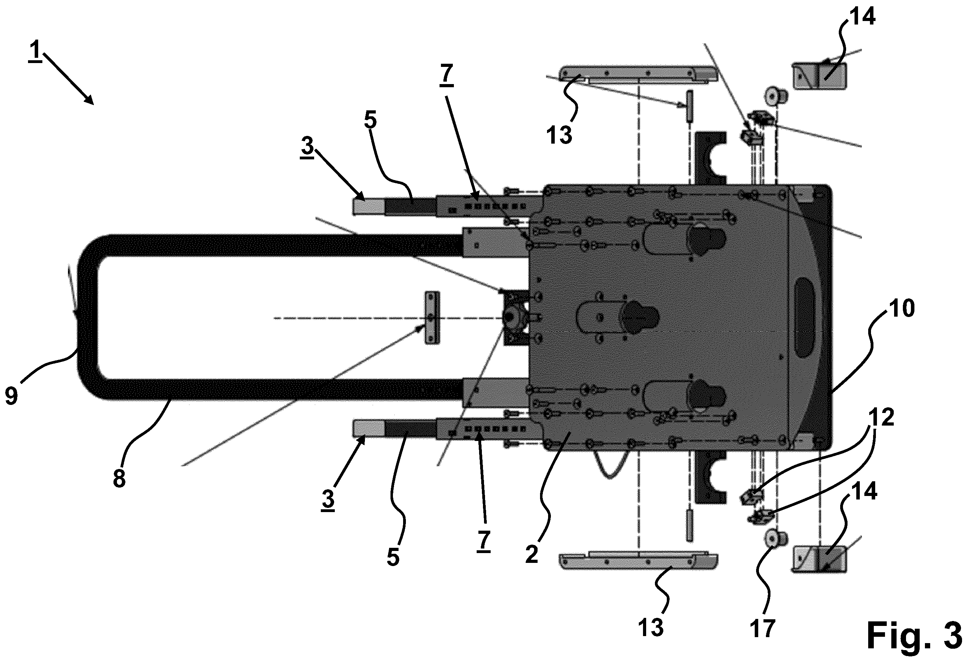

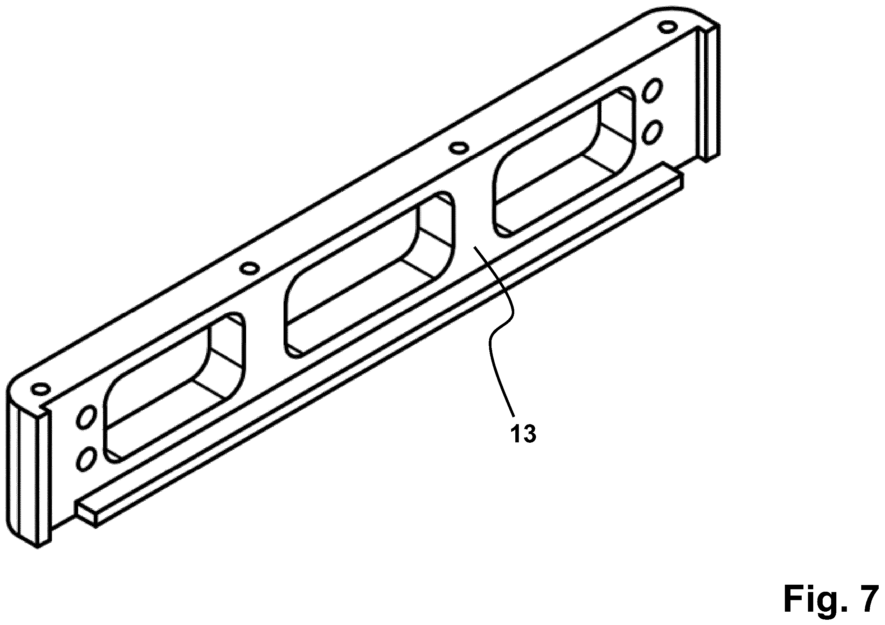

Die Fig. 1 bis Fig. 3 zeigen den montierten Adapter 1 mit seinen einzelnen Teilen. Die Grundstruktur des Adapters 1 bilden die Halteplatte 2 und die Sitzplatte 10, welche in einem Abstand voneinander montiert sind. Der Abstandshalter zwischen den beiden Platten ist bevorzugt beidseitig eine Versteifung 13, welche jeweils im Bereich der Längsseiten der Platten angebracht ist. Die Versteifung 13 (siehe Fig. 7) befindet sich bevorzugt in ihrer Gesamtheit zwischen der Halteplatte 2 und der Sitzplatte 10. Bevorzugt besteht die Versteifung 13 aus zwei Teilen, die den Rastarm 5 umgeben und bevorzugt sogar als Aufnahme für den Rastarm 5 gestaltet sind.

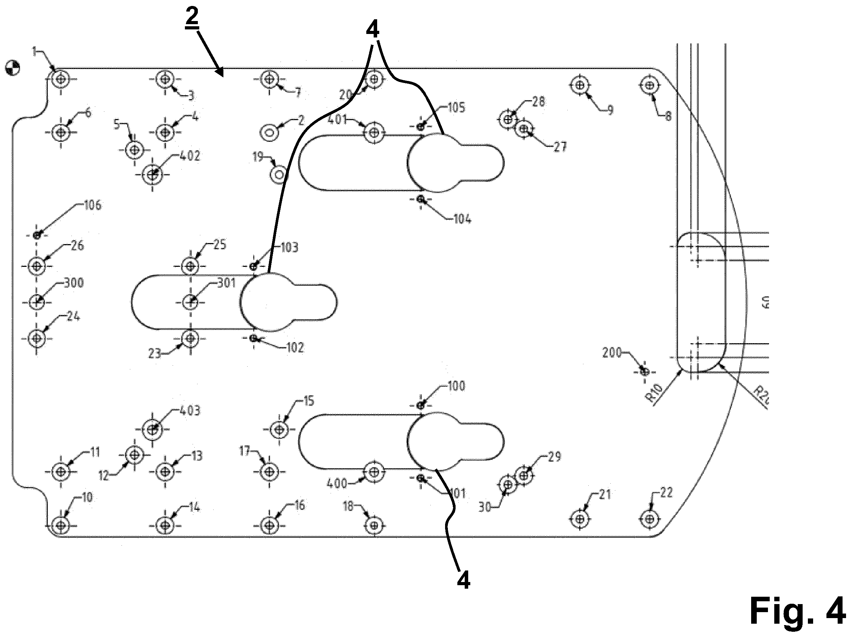

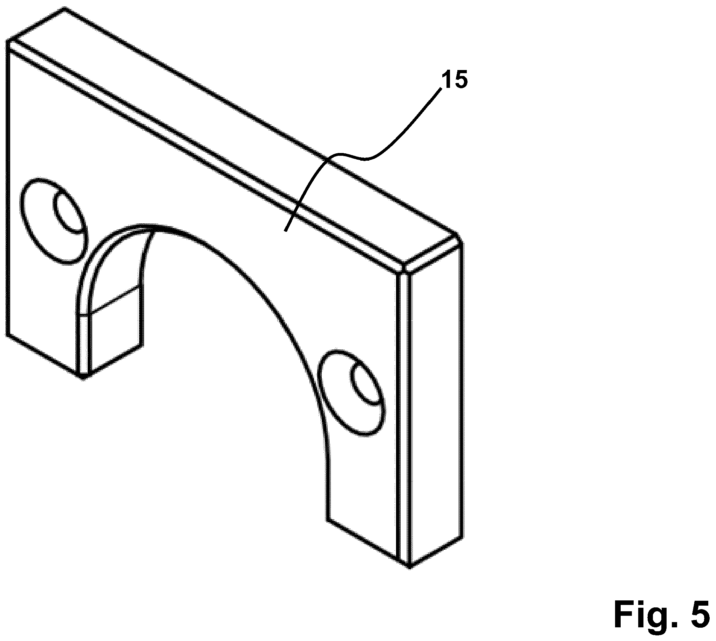

Die Halteplatte 2 (siehe Fig. 4) ist hierbei die obere der beiden Platten und umfasst diverse Befestigungsvorrichtungen 4 zum Befestigen von Gegenständen oder Befestigungsvorrichtungen für Gegenstände. Bevorzugt schließt sich an die Befestigungsvorrichtungen 4, bevorzugt im Bereich des Radius, jeweils eine Pilzführung 15 an. Diese Pilzführung (siehe Fig. 5) dient bevorzugt als Führung für zylindrische Bauteile, die in die Befestigungsvorrichtung 4 eingeführt werden, und befindet sich bevorzugt an der dem Stützbügel 8 zugewandten Hälfte der größten Bohrung der Befestigungsvorrichtung 4. Hier wird die Pilzführung 15 bevorzugt unterhalb der Halteplatte 2 (in Richtung der Sitzplatte 10 zeigend) angebracht und weist bevorzugt den gleichen Radius auf wie der Radius der entsprechenden größten Bohrung der Befestigungsvorrichtung 4.

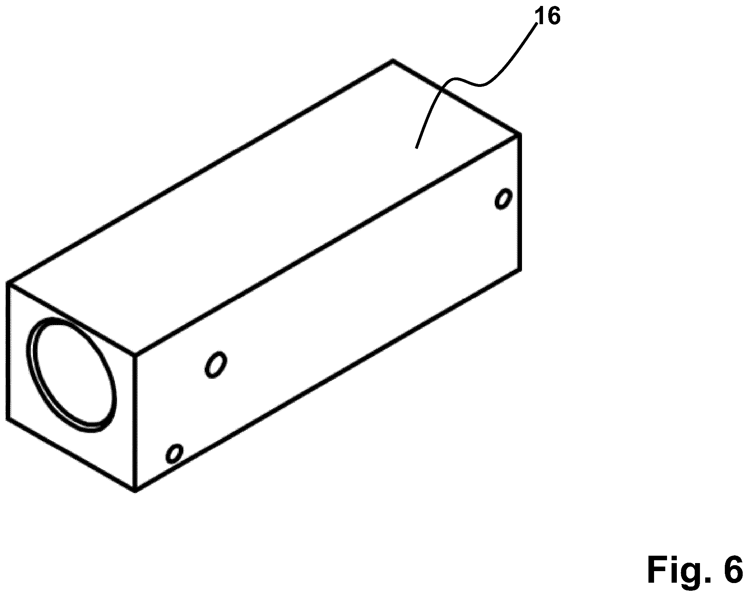

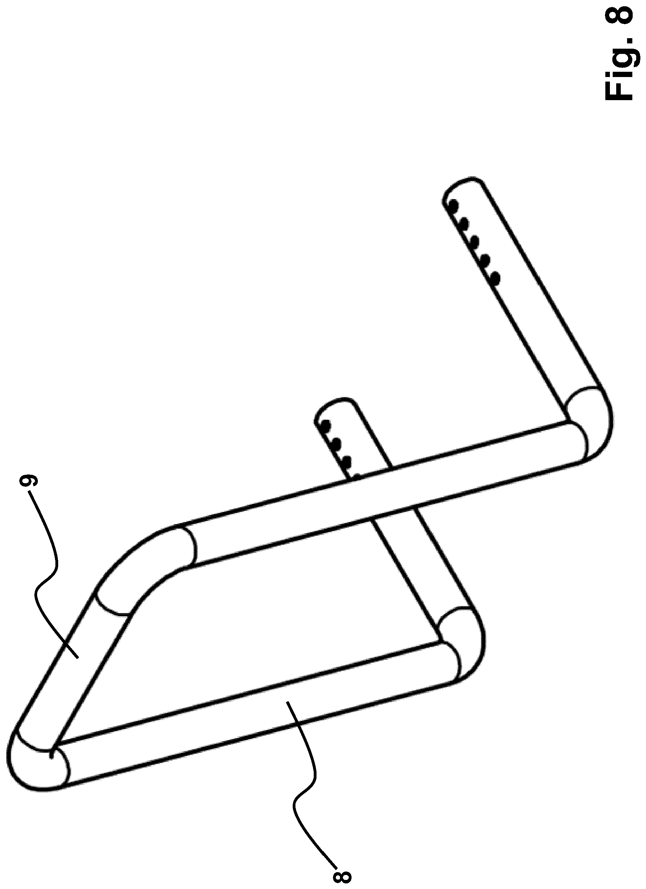

Am hinteren Ende der Halteplatte 2 (dem den Rastarmen 5 zugewandten Ende) umfasst der Adapter 1 einen Stützbügel 8 mit einem Haltegriff 9 (siehe Fig. 8). Der Stützbügel 8 ist bevorzugt eine gebogene Rohrkonstruktion, wobei dessen beiden offenen Enden bevorzugt jeweils von einem Stützbügelhalter 16 (siehe Fig. 6) aufgenommen werden. Dieser Stützbügelhalter 16 wird ebenso bevorzugt zwischen Halteplatte 2 und Sitzplatte 10 montiert. Der Stützbügel 8 umfasst hierbei mehrere Bohrungen an seinen beiden freien Enden. Diese können genutzt werden, um den Stützbügel 8 in seiner Position variabel vorzusehen. So kann der Stützbügel 8 näher an die Halteplatte 2 heran oder weiter von ihr weg montiert werden.

An der Halteplatte 2 werden zudem bevorzugt zwei Rastarme 5 montiert, die ebenfalls teilweise zwischen der Halteplatte 2 und der Sitzplatte 10 liegen. Am dem Stützbügel 8 zugewandten Ende des Rastarms 5 umfasst dieser eine Rastvorrichtung 3 zur Befestigung an einer Halterung eines Kraftfahrzeugs. Der Rastarm 5 ist ineinander verschieblich bzw. teleskopierbar ausgeführt und verfügt dabei über die Verschieberichtung V zum Einfahren und Ausfahren. Zudem umfasst der Rastarm 5 einen Ratschenmechanismus 7 mit diversen Öffnungen für bevorzugt einen ersten Zahn und einen zweiten Zahn (hier nicht gezeigt).

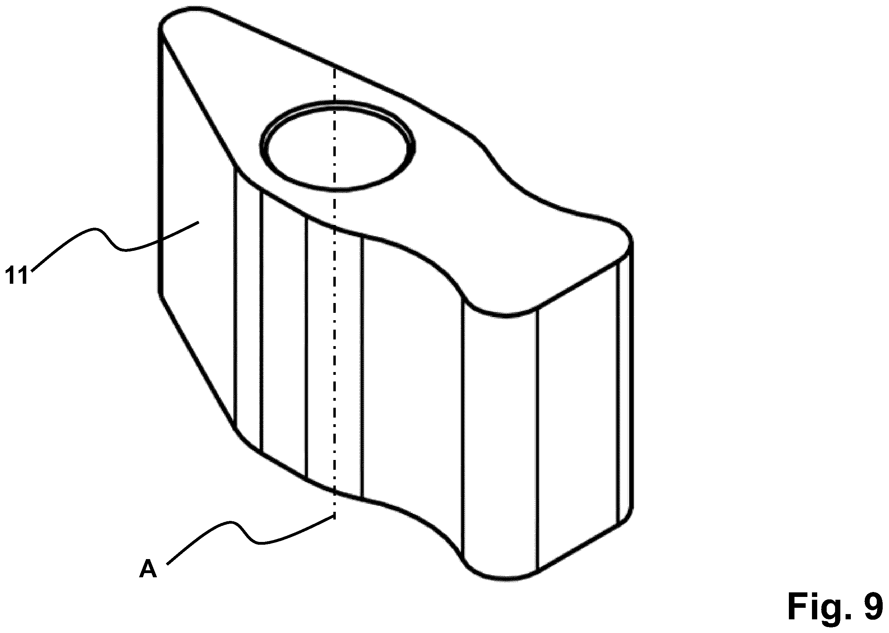

Am dem Stützbügel 8 abgewandten Ende verlässt den Rastarm ein Teil des Bowdenzugmechanismus 6, welcher mit dem Ratschenmechanismus 7 interagiert. Am freien Ende des Bowdenzugmechnismus 6 ragt die Seele aus der Hülse, wobei das freie Ende der Seele bevorzugt einen Vorsprung aufweist. Dieser Vorsprung am freien Ende der Seele kann von einem Daumenöffner 11 (siehe Fig. 9) aufgenommen werden. Am Adapter 1 sind bevorzugt zwei Daumenöffner 11 angebracht, die ebenfalls zumindest teilweise zwischen der Halteplatte 2 und der Sitzplatte 10 liegen, wobei bevorzugt jeweils ein Daumenöffner 11 einen Bowdenzugmechnismus 6 betätigt. Die Daumenöffner 11 sind bevorzugt jeweils am unteren (dem Stützbügel 8 abgewandten) Ende der Längsseite der Halteplatte 2 angebracht und sind bevorzugt zumindest teilweise rotierbar um die Achse A der Bohrung des Daumenöffners 11. Um die Rotationsbewegung bestimmungsgemäß ausführen zu können, werden, bevorzugt beidseitig, in die Bohrung des Daumenöffners 11 Gleitbuchsen 17 eingebracht.

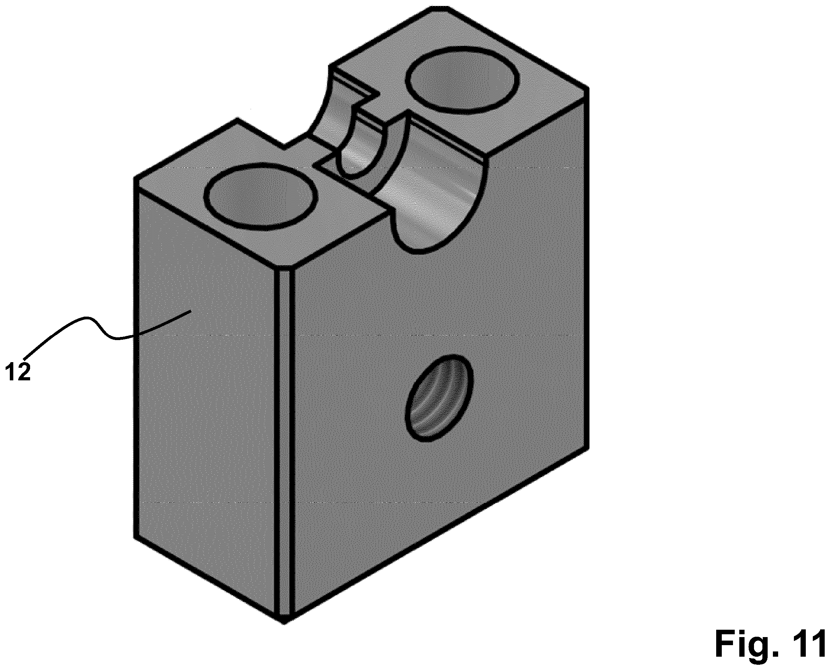

Um die Zugkraft des Bowdenzugmechnismus 6 übertragen zu können, ist jeweils bevorzugt zwischen dem Rastarm 5 und dem Daumenöffner 11 ein Gegenhalter 12 (siehe Fig. 11) angebracht. Dieser Gegenhalter 12 nimmt das Ende der Hülse des Bowdenzugmechnismus 6 auf, wodurch die Seele unter Abstützung der Hülse des Bowdenzugmechnismus 6 bewegt werden kann. Der Gegenhalter 12 besteht bevorzugt aus zwei übereinander angebrachten Teilen, die in Fig. 11 zu sehen sind. Diese beiden Teile werden bevorzugt von zwei Stiften zusammengehalten und ebenfalls komplett zwischen der Halteplatte und der Sitzplatte 10 montiert.

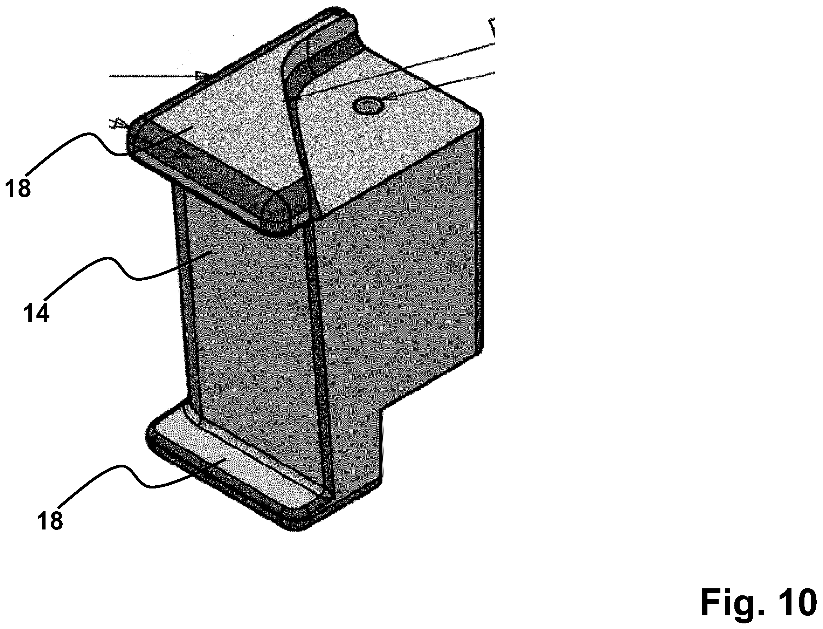

Bevorzugt im Bereich der hinteren Ecken (an der dem Stützbügel 8 abgewandten Kurzseite der Halteplatte 2) befindet sich bevorzugt jeweils ein Gurthalter 14. Dieser Gurthalter 14 (siehe Fig. 10) weist bevorzugt beidseitig eine Führung 18 für einen Kraftfahrzeuggurt auf.

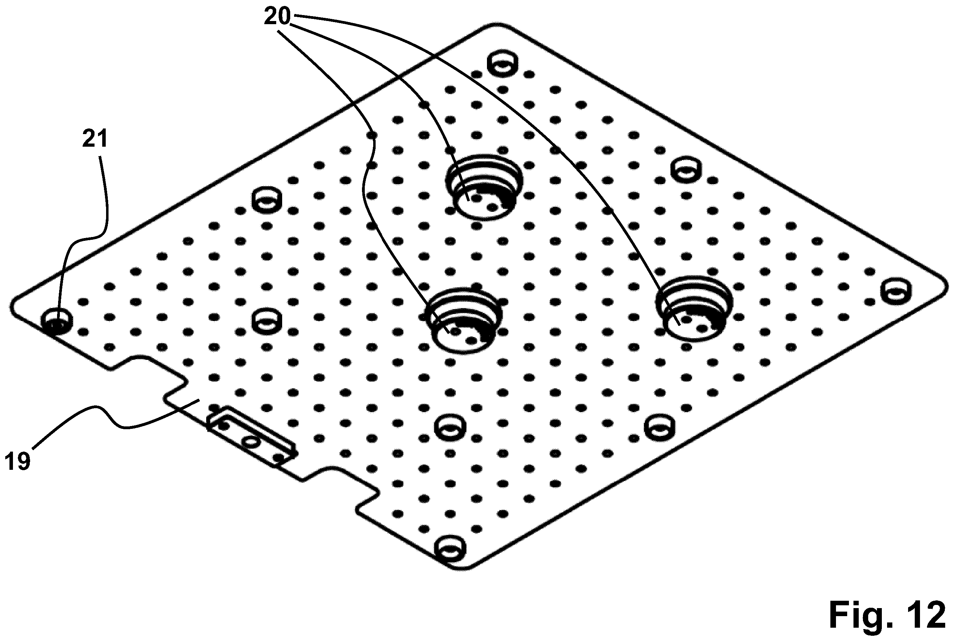

Die Befestigungsvorrichtungen 4 in der Halteplatte umfassen bevorzugt ein kreisrundes Loch, an welches ein Langloch mit kleinerem Durchmesser anschließt, welches in Richtung der der Sitzlehne des Sitzes abgewandten Seite verläuft. Bevorzugt verläuft das Langloch parallel zu der Längsseite des Adapters 1 und steht bevorzugt senkrecht auf die Querseite des Adapters 1. Diese Befestigungsvorrichtungen 4 können so auf einfache Art und Weise für viele Befestigungsmöglichkeiten genutzt werden. Es ist bevorzugt, dass eine äquivalente Adapterplatte 19 (siehe Fig. 12) mit befestigten Gegenständen schon im Labor oder außerhalb des Kraftfahrzeugs vorbereitet wird. Hierfür weist die Adapterplatte 19 bevorzugt eine Vielzahl an Bohrungen auf, die zum Anbringen der verschiedensten Gegenstände genutzt werden können.

Diese Adapterplatte weist auf ihrer Unterseite bevorzugt pilzförmige Vorsprünge 20 auf, die in die kreisrunden Löcher der Befestigungsvorrichtungen 4 eingeführt werden können. Dementsprechend müssen die pilzförmigen Vorsprünge äquivalent zu den Befestigungsvorrichtungen 4 in der Halteplatte 2 verteilt sein. Danach liegt die Unterseite der Adapterplatte 19 bevorzugt auf der Oberseite der Halteplatte 2 auf oder mit Abstandshaltern 21 von dieser distanziert und der schlanke Teil der pilzförmigen Vorsprünge kann in den Langlöchern zu ihrem geschlossenen Ende geführt werden, wodurch die Adapterplatte 19 in den Befestigungsvorrichtungen 4 an der Halteplatte gehalten wird.

Wie oben erwähnt, ist es bevorzugt, wenn das kreisrunde Loch in seinem Umfangsbereich zumindest teilweise von einer Pilzführung 15 verstärkt wird, die auf der Unterseite der Halteplatte 2 angebracht ist. Diese Pilzführung 15 dient als einfacher Zentrieranschlag, beim Entnehmen bzw. beim Abdocken der oben beschriebenen Adapterplatte 1.

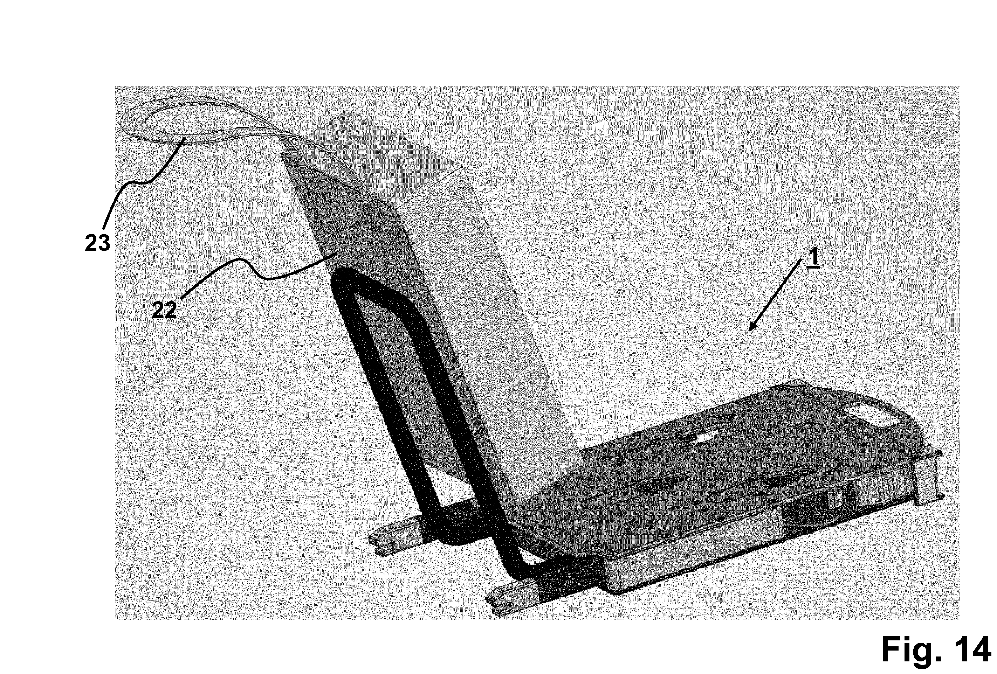

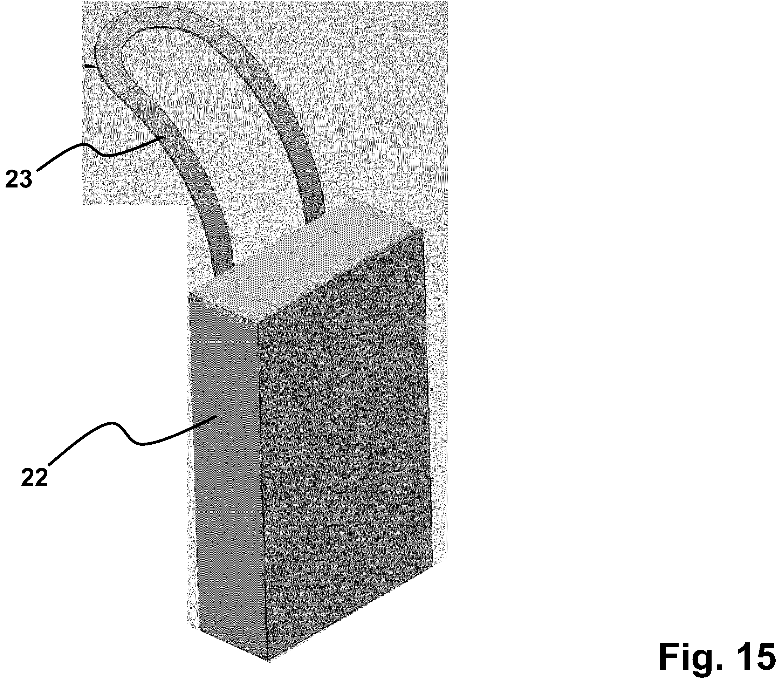

Darüber hinaus zeigen die Figuren Fig. 14 und Fig. 15 eine Abstützung 22 (siehe Fig. 15) und deren bevorzugte Befestigungsposition relativ zum Adapter 1 (siehe Fig. 14). Die Abstützung 22 dient zur Abstützung des Kraftfahrzeuggurts im Brustgurtbereich. Der Gurt liegt dadurch in diesem Bereich nicht nur auf dem Sitz auf oder ist gar lose in der Luft, sondern er liegt im Brustgurtbereich zumindest teilweise an der Abstützung 22 auf. Die Abstützung 22 ist bevorzugt als ein Polster oder Kissen ausgeführt, welches an seinem oberen, der Kopfstütze zugewandten Ende mindestens eine Schlaufe 23 umfasst. Diese Schlaufe ist als zusätzliche Sicherung und Schutz vor Verrutschen im montierten Zustand des Adapters 1 um die Kopfstütze des jeweiligen Sitzes herum angebracht. Das Polster bzw. Kissen umfasst hierbei bevorzugt einen Styroporkern, der quasi eine menschliche Brust simuliert, wodurch der Kraftfahrzeuggurt besser anliegt. Hierdurch kann der Adapter 1 noch größere Belastungen aushalten und ist zusätzlich noch besser gesichert.

Fig. 14 zeigt die hierzu bevorzugte Positionierung der Abstützung 22, welche bevorzugt auf dem Stützbügel 8 aufliegt. Die Abmessungen der Abstützung 22 können variieren, liegen jedoch bevorzugt in einem Bereich von einer Höhe von ungefähr 440 mm, einer Breite von ungefähr 270 mm und einer Tiefe von ungefähr 100 mm.

### SONSTIGES

Zu gegebener Zeit wird bei Bedarf auch Schutz beansprucht werden für eine in Alleinstellung stehende oder in Kombination mit anderen schon aufgestellten Ansprüchen und/oder einem einzelnen oder mehreren einzelnen Merkmalen aus der Beschreibung befindliche Konstruktion, wie folgt:
Adapter 1 zum im Crashfall Insassen vor vermeidbaren Verletzungen schützenden Festlegen von Mess- und/oder Datenverarbeitungsgeräten in der Fahrgastzelle eines Kraftfahrzeugs, bevorzugt mit mehreren verschiebbaren Rastarmen 5 zum Verriegeln des Adapters 1 an einer oder mehreren Isofix-Befestigungsbügeln, dadurch gekennzeichnet, dass der mindestens eine Rastarm 5 jeweils einen Bowdenzugmechanismus 6 umfasst, mit welchem der Rastarm gelöst werden kann.

### REFERENZLISTE

- 1: Adapter
- 2: Halteplatte
- 3: Rastvorrichtung
- 4: Befestigungsvorrichtung
- 5: Rastarm
- 6: Bowdenzugmechanismus
- 7: Ratschenmechanismus
- 8: Stützbügel
- 9: Haltegriff des Stützbügels
- 10: Sitzplatte
- 11: Daumenöffner
- 12: Gegenhalter
- 13: Versteifung
- 14: Gurthalter
- 15: Pilzführung
- 16: Stützbügelhalter
- 17: Gleitbuchse des Daumenöffners
- 18: Führung des Gurts
- 19: Adapterplatte
- 20: Pilzförmige Vorsprünge
- 21: Abstandshalter
- 22: Abstützung für Brustgurt
- 23: Schlaufe

- A: Achse des Daumenöffners
- V: Verschieberichtung

## Patentansprüche

1. Adapter (1) für ein Kraftfahrzeug, mit einer Halteplatte (2), wobei an der Halteplatte (2) insbesondere zwei Rastvorrichtungen (3) zum Verrasten des Adapters (1) mit einer am Kraftfahrzeug angebrachten Halterung angeordnet sind und wobei an der Halteplatte (2) mindestens eine Befestigungsvorrichtung (4) zum Befestigen eines Gegenstands am Adapter (1) angeordnet ist, wobei der Adapter (1) zwei insbesondere parallel laufende Rastarme (5) umfasst, wobei je eine der Rastvorrichtungen (3) an je einem Ende der Rastarme (5) angeordnet ist, wobei die Rastarme (5) derart geführt sind und mit einem Feststeller zusammenwirken, dass die Rastarme (5) relativ zu der Halteplatte (2) in und entgegen einer Verschieberichtung (V) verschoben werden können, solange der Feststeller nicht aktiviert ist und die Rastarme (5) festgelegt sind, wenn der Feststeller aktiviert ist, **dadurch gekennzeichnet, dass** ein Rastarm (5) jeweils einen Bowdenzugmechanismus (6) umfasst, mit welchem der Feststeller gelöst werden kann.

2. Adapter (1) nach Anspruch 1, **dadurch gekennzeichnet, dass** der Feststeller ein Ratschenmechanismus (7) ist, der in aktiviertem Zustand gestattet, dass die Rastarme (5) derart, vorzugsweise nach Art eines Teleskops, relativ zu der Halteplatte (2) verschoben werden können, dass die einer Rücksitzlehne des Fahrzeugs unmittelbar gegenüberliegende Stirnseite der Halteplatte (2) näher an die Rücksitzlehne herankommt oder sogar deren Polsterung örtlich zusammendrückt, woraufhin der betroffene Rastarm (5) vorzugsweise selbsttätig in dieser Position festgelegt wird.

3. Adapter (1) nach einem der vorhergehenden Ansprüche,
**dadurch gekennzeichnet, dass** der Feststeller ein Ratschenmechanismus (7), ein Klinkengesperre oder ein sonstiger Selbsthemmungsmechanismus ist, der ein immer dichteres Heranschieben der Halteplatte (2) an die Rücksitzlehne oder deren immer stärkere Kompression erlaubt, aber verhindert, dass die Halteplatte (2) sich aus einer einmal erreichten Sperrposition wieder in Gegenrichtung, weg von der Rücksitzlehne bewegt.

4. Adapter (1) nach einem der vorhergehenden Ansprüche,
**dadurch gekennzeichnet, dass** der Adapter (1) einen Stützbügel (8) zur Verhinderung einer Rotation um die Halterung umfasst, und dass der Stützbügel (8) insbesondere einen Haltegriff (9) zum Halten des Adapters (1) umfasst.

5. Adapter (1) nach einem der vorhergehenden Ansprüche,
**dadurch gekennzeichnet, dass** der Adapter (1) eine Sitzplatte (10) umfasst, die in einem Abstand zur Halteplatte (2) mit der Halteplatte (2) fest verbunden ist, wobei die Sitzplatte (10) zum Auflegen des Adapters (1) auf den Fahrzeugsitz vorgesehen ist.

6. Adapter (1) nach einem der vorhergehenden Ansprüche,
**dadurch gekennzeichnet, dass** die Verbindung eines Gegenstands mit der Befestigungsvorrichtung (4) lösbar ist und insbesondere eine Schraubverbindung, eine Klemmvorrichtung oder eine Bajonettverbindung ist.

7. Adapter (1) nach einem der vorhergehenden Ansprüche,
**dadurch gekennzeichnet, dass** der Adapter (1) mindestens einen Daumenöffner (11) aufweist, mit welchem mindestens ein Bowdenzugmechanismus (6) betätigt werden kann.

8. Adapter (1) nach einem der vorhergehenden Ansprüche,
**dadurch gekennzeichnet, dass** der Adapter (1) in der Nähe des mindestens einen Daumenöffners (11) jeweils einen Gegenhalter (12) aufweist, welcher die Hülse des Bowdenzugmechanismus (6) zurückhält.

9. Adapter (1) nach einem der vorhergehenden Ansprüche,
**dadurch gekennzeichnet, dass** der Adapter (1) auf seinen beiden Längsseiten bevorzugt jeweils eine Versteifung (13) als Abstandshalter zwischen Sitzplatte (10) und Halteplatte (2) aufweist.

10. Adapter (1) nach einem der vorhergehenden Ansprüche,
**dadurch gekennzeichnet, dass** der Adapter (1) mindestens einen, bevorzugt zwei Gurthalter (14) aufweist, welche als Führung eines Kraftfahrzeug-Gurts dienen.

11. Adapter (1) nach einem der vorhergehenden Ansprüche,
**dadurch gekennzeichnet, dass** der Feststeller, bevorzugt in Gestalt eines Ratschenmechanismus (7), zwei einklappbare Zähne umfasst, welche bevorzugt auf der der Halteplatte (2) zugewandten Seite aus dem Rastarm (5) herausragen, wobei die Zähne in Breitenrichtung versetzt zueinander sind und wobei ein erster Zahn eine ihm zugeordnete Öffnung in der entsprechenden Seite der Verkleidung des Rastarms (5) durchdringen kann, wobei dieser erste Zahn durch die Betätigung des Bowdenzugmechanismus (6) eingeklappt werden kann und wobei der zweite Zahn mehrere ihm zugeordnete Öffnungen in der entsprechenden Seite der Verkleidung des Rastarms (5) durchdringen kann, wobei dieser zweite Zahn durch teleskopartige Verschiebung des Rastarms (5) durch das Überfahren von Material über ihn eingeklappt wird und die teleskopartige Bewegung nach dem Einschnappen in eine Öffnung in einer Richtung blockiert.

12. Adapter (1) nach einem der vorhergehenden Ansprüche,
**dadurch gekennzeichnet, dass** der Feststeller, bevorzugt in Gestalt eines Ratschenmechanismus (7), so gestaltet ist, dass in der jeweils extremen Position des zweiten Zahns zunächst der erste Zahn mittels des Bowdenzugmechanismus (6) eingeklappt werden muss, damit eine teleskopartige Verschiebung des Rastarms (5) möglich ist.

13. Adapter (1) nach einem der vorhergehenden Ansprüche,
**dadurch gekennzeichnet, dass** der Feststeller, bevorzugt in Gestalt eines Ratschenmechanismus (7), so gestaltet ist, dass der zweite Zahn nicht in eine der ihm zugeordneten Öffnungen einrastet, wenn eine auseinanderschiebende teleskopartige Bewegung des Rastarms (5) ausgeführt wird.

14. Adapter (1) nach einem der vorhergehenden Ansprüche,
**dadurch gekennzeichnet, dass** die Rastvorrichtung (3) eine rotierbare Halterungsaufnahme umfasst, die einen oberen und einen unteren Rastfinger aufweist, wobei der obere und untere Rastfinger die Halterung teilweise umgreifen, wobei die Halterungsaufnahme bei Einführen der Halterung und einem Rotieren der Halterungsaufnahme um 90 Grad derart einrastet, dass der obere Haltefinger einen Zugang zur Halterung verdeckt und die Halterungsaufnahme bestimmungsgemäß nicht mehr gelöst werden kann, außer der Bowdenzugmechanismus (6) wird betätigt.

15. Adapter (1) nach einem der vorhergehenden Ansprüche,
**dadurch gekennzeichnet, dass** der Feststeller, bevorzugt in Gestalt eines Ratschenmechanismus (7), derart gestaltet ist, dass bei einer eingerasteten Halterungsaufnahme der erste Zahn derart lose ist, dass ein teleskopartiges Zusammenschieben des Rastarms (5) auch ohne Betätigung des Bowdenzugmechanismus (6) möglich ist.

16. Adapterplatte (19) in Gestalt einer ebenen Platte mit Bohrungen, **dadurch gekennzeichnet, dass** an der Unterseite der Platte pilzförmige Vorsprünge nach unten herausragen.

17. System umfassend einen Adapter (1), **dadurch gekennzeichnet, dass** das System eine Abstützung (22) für den Brustgurtbereich eines Kraftfahrzeuggurts umfasst.

18. System nach Anspruch 17, **dadurch gekennzeichnet, dass** die Abstützung (22) ein Polster oder Kissen ist, welches an seinem oberen, der Kopfstütze zugewandten Ende mindestens eine Schlaufe (23) umfasst, die im montierten Zustand des Adapters (1) die Kopfstütze des Sitzes umgreift.

19. System nach Anspruch 18, **dadurch gekennzeichnet, dass** die Abstützung (22) ein Polster oder Kissen darstellt, welches einen Styroporkern aufweist.

20. System umfassend einen Adapter (1), eine Adapterplatte (19) und bevorzugt einer Abstützung (22), **dadurch gekennzeichnet, dass** Messtechnik und/oder mit der Messtechnik in Verbindung stehende Komponenten auf der Adapterplatte (19) montiert werden, welche über die pilzförmigen Vorsprünge und die entsprechenden Befestigungsvorrichtungen (4) an der Halteplatte (2) montiert wird.

21. System umfassend einen Adapter (1), eine Adapterplatte (19), bevorzugt eine Abstützung (22), einen Adapter zur Befestigung an dem Beifahrersitz des Fahrzeugs und einer Halteplatte zur Anbringung im Kofferraum des Fahrzeugs, **dadurch gekennzeichnet, dass** Messtechnik und/oder mit der Messtechnik in Verbindung stehende Komponenten auf der Adapterplatte (19) montiert werden, welche über die pilzförmigen Vorsprünge und die entsprechenden Befestigungsvorrichtungen (4) entweder an der Halteplatte (2) des Adapters (1) montiert werden kann oder auf ebenjene Weise am Adapter des Beifahrersitzes montiert werden kann oder auf ebenjene Weise an der Halteplatte im Kofferraum montiert werden kann.
